# EUROPEAN PATENT APPLICATION

(11) **EP 4 464 920 A1**
(43) Date of publication of application: **20.11.2024**
(21) Application number: 24176357.2
(22) Date of filing: 16.05.2024
(51) Int. Cl.: F16L 5/04, F24F 11/33, A62C 2/12, A62C 2/06

(54) **A FIRE PROTECTION DAMPER DEVICE, A METHOD OF MOUNTING SUCH DEVICE TO A STRUCTURE, AND A FIRE PROTECTION DAMPER DEVICE INSTALLATION**

(30) Priority: 17.05.2023 SE 2350599
(71) Applicant: Bevent Rasch AB, 501 17 Borås (SE)
(72) Inventor: Hermansson, Pär, 591 73 Motala (SE); Magnusson, Per-Magnus, 504 56 Borås (SE)
(74) Representative: AWA Sweden AB

(57) **Abstract**

The present disclosure relates to a fire protection damper device (1) for mounting to a ventilation opening (3) of a structure (2) of a building, the damper device (1) comprising: a duct body (10); a damper blade (11) movably arranged in the duct body, the damper blade (11) being movable between an open position and a closed position; a mounting flange (15) for mounting of the damper device (1) to said structure (2), wherein the mounting flange (15) extends around the duct body (10). The fire protection damper device (1) further comprises an elastic sealing member (16) for sealing the mounting flange (15) against said structure, wherein the sealing member (16) extends around the duct body (10). The present disclosure further relates to a method of mounting such device (1) to a structure (2), such as a wall. The present disclosure further relates to a fire protection damper device installation 100.

## Description

### Technical field

The present document relates to a fire protection device. More particularly, the present document relates to a fire protection damper device, such as a fire and/or smoke damper. The present document further relates to a method of mounting such device to a structure, such as a wall. The present document further relates to a fire protection damper device installation.

### Background

In case of a fire emergency in a building, it is essential that the building has fire protection. Without proper fire protection, fire and smoke can quickly and easily spread from one location in the building to another.

In order to prevent spread of fire and smoke there are certain building regulations requiring that a building is divided into so called fire cells. A fire cell may be defined as a separate part of a building, for example a room or a group of rooms (e.g. an apartment), where a fire can develop without spreading to other parts of the building or other buildings, allowing for enough time to evacuate the building and reduce property damage.

So called passive fire protection is designed to prevent smoke and toxic gas from spreading and to compartmentalize the fire. Fire and/or smoke dampers are one example of passive fire protection products, which is commonly used together with heating ducts, ventilation ducts, air conditioning ducts and other openings of fire rated structures (e.g. walls, floors, or other fire barriers) in a building to prevent spread of fire and smoke. Known dampers are controlled to close at certain conditions, such as for example when there is a rise in temperature, when smoke is detected and/or a fire alarm system is set off in the building.

WO0209081 1A1 discloses one example of a fire restrictor and/or combustible gas restrictor to be inserted into an opening of a wall for a ventilation duct. The restrictor comprises a tubular body with a restrictor leaf rotatably mounted therein, which is designed to be brought by a control device into a closed position when temperatures or smoke levels is in excess of a predetermined value. Further, the tubular body is at least partly surrounded of a so-called fire protection compound, wherein a holder device, such as a sheet-metal-shroud, is arranged around the fire protection compound. The shroud can comprise lugs by means of which the restrictor can be fixed to the wall.

It is however desirable to provide an improved fire protection damper device, such as a fire and/or smoke damper, that can be produced with less material and at a lower cost. Further, it is desirable to provide an improved fire protection damper device that enables maintenance of the damper device. It also desirable that recyclability of the damper device is enabled.

### Summary

It is an object of the present disclosure, to provide an improved fire protection damper device which eliminates or alleviates at least some of the disadvantages of the prior art.

More specific objects include providing a fire protection damper device that can be produced at low cost, which enables maintenance and/or which enables recyclability of the damper device.

The invention is defined by the appended independent claims. Embodiments are set forth in the appended dependent claims and in the following description and drawings.

According to a first aspect, there is provided a fire protection damper device for mounting to a ventilation opening of a structure of a building, the damper device comprising: a duct body; a damper blade movably arranged in the duct body, the damper blade being movable between an open position and a closed position; a mounting flange for mounting of the damper device to said structure, wherein the mounting flange extends around the duct body. The damper device further comprises an elastic sealing member for sealing the mounting flange against said structure, wherein the sealing member extends around the duct body.

The fire protection damper device may for example be a fire damper and/or smoke damper.

By "ventilation opening" is meant an opening intended for air transport for ventilation purposes, including transport of untreated air and/or treated air, such as cooled, heated, humidified, dehumidified and/or filtrated air. Thus, "ventilation opening" is not to be interpreted as an opening for supplying of, for example, oxygen or working medium to a heating pump. The ventilation opening may be a ventilation opening in a wall, which merely connects the two sides of the structure. Alternatively, the ventilation opening may be connected to a ventilation channel, whereby the duct body is connected to a ventilation channel on one or both sides of the structure.

The structure may form a fire cell boundary. The structure may, as non-limiting examples, be a wall structure, a floor structure, or a ceiling structure.

The fire protection damper device may be a fire and/or smoke damper suitable for passing of a ventilation duct through a fire cell boundary, such as a wall, in a building divided into fire cells.

The duct body may be provided in form of a tubular body. The duct body may present a cross-sectional area. The duct body may have a substantially circular, rectangular, or square cross-section. The duct body may have a substantially constant cross-sectional area, as seen in a direction from the first end to the second end of the duct body. The duct body may have an axial direction, substantially perpendicular to the cross-sectional area of the duct body.

The duct body may present a first end portion, and an opposite second end portion. The second end portion may be adapted to be fitted into said ventilation opening of said structure. The duct body may present a first open end and an opposite second open end. Thus, the duct body can be seen to present a length corresponding to a distance, as seen in the axial direction, between said first and second open ends.

The fire protection damper device can comprise a damper blade actuating arrangement for causing the damper blade to move between the open position and the closed position. The damper blade actuating arrangement may be manually and/or automatically controllable. For example, the fire protection damper device may comprise an actuator for causing the damper blade to move between the open position and the closed position.

The actuator may be arranged to cause the damper blade to move based on a signal from at least one sensor of the damper device. The at least one sensor may be configured to detect a fire by sensing at least one fire-related parameter. The sensor may for example be able to detect a rise in temperature and/or smoke. Such sensor may be arranged in the fire protection damper device itself.

Alternatively, or additionally, the actuator may be arranged to cause the damper blade to move based on a signal from an external sensor, i.e. a sensor arranged separately of the damper device. The actuator may for example be arranged to cause the damper blade to move based on a signal from a fire alarm system.

As another example, the fire protection damper device may comprise a fusible link. Thus, the damper blade may be moved into the closed position upon the operation of a fusible link.

The damper blade actuating arrangement may be motor-driven. For example, a motor may operate the actuator, causing the damper blade to move between the open position and closed position and optionally vice versa. Additionally, or alternatively, the damper blade may be moved between the open and closed position manually, for example by use of a crank or rotatable arm. Additionally, or alternatively, a biasing member, such as a spring, may be arranged to cause the damper blade to move between the open position and the closed position. The biasing member may thus bias the damper blade towards the closed position. Release of the damper blade may be realized based on a sensor signal, upon which a locking mechanism is operated to release the damper blade. Alternatively, the damper blade may be held in its open position by a temperature-sensitive device, which melts when a certain temperature is reached.

The sealing member is typically a pre-formed sealing member, in the sense that the sealing member is pre-formed as an elongated strip of material with a certain, typically constant, cross section, which is cut to a desired length and mounted to the duct body and/or to the mounting flange. Surfaces of the sealing member which face away from the mounting flange and/or from the duct body may be essentially non-adhesive, such that they do not stick to a surface against which the sealing member is operating and in particular such that they do not damage such surface. Surfaces of the sealing member facing the mounting flange and/or the duct body may be non-adhesive. Alternatively, at least a portion of the surfaces of the sealing member facing the mounting flange and/or the duct body may be adhesive.

The elastic sealing member can be seen to be arranged closer to the second end of the duct body than the mounting flange, as seen in the axial direction. Thus, the sealing member is arranged to provide a seal between the mounting flange and said structure when in use, when the damper device is mounted to said ventilation opening of said structure.

The mounting flange may present a first substantially flat surface facing the axial direction towards the first end. The mounting flange may present a second substantially flat surface facing the axial direction towards the second end. The first and second substantially flat surfaces being opposite to one another. Thus, the second substantially flat surface of the mounting flange can be seen to face said structure when mounted to said structure.

The elastic sealing member may be formed of an elastic material.

By the fire protection damper device as described above, it is possible to provide an improved fire protection damper device that is compact in shape, that can be produced with less material at a low cost, and that fulfils fire protection regulations. Furthermore, no fire sealing compound is required between the flange and the structure to which it is mounted. Thereby, the fire protection damper device can be detached from the structure without breaking the flange or the structure. Thus, a demountable fire protection damper device can be provided. As a result, maintenance of the fire protection damper device, for example when there is a need to change the fire blade, can be enabled. Also, recyclability of the fire protection damper device is enabled.

The mounting flange may have a first thickness, and the elastic sealing member may have a second uncompressed thickness, wherein the second uncompressed thickness is larger than the first thickness, as seen in an axial direction of the duct body, the axial direction being substantially perpendicular to a cross-sectional area of the duct body.

By "uncompressed thickness" is meant the thickness as measured when the elastic sealing member is uncompressed.

The first thickness of the mounting flange may be less than 5 mm, preferably less than 3 mm or less than 2 mm.

The second uncompressed thickness of the elastic sealing member may be 5-30 mm, preferably 5-10 mm, 10-15 mm, 15-20, 20-25 or 25-30 mm.

The elastic sealing member may be formed of an expanded polymer material or of a hollow polymer material.

The elastic sealing member may be provided in the form of a prefabricated sealing strip.

The sealing strip may have a substantially circular, rectangular, or square cross-section.

The sealing strip may present a square profile, for example a square profile of 10x10 mm.

The elastic sealing member may extend radially outwardly from an outer surface of the duct body.

A radial extent of the sealing member may be smaller than a radial extent of the mounting flange, as seen from an outer surface of the duct body.

The sealing member may be arranged adjacent to the duct body.

The sealing member may contact the duct body.

As one alternative, a film or a tape may separate the sealing member from duct body.

The elastic sealing member may extend axially outwardly from a surface of the mounting flange.

The elastic sealing member can be seen to extend axially outwardly from the second substantially flat surface of the mounting flange.

The mounting flange may be formed from a sheet metal substrate.

Preferably the mounting flange may be formed from one layer of sheet metal. Thus, the mounting flange may be substantially flat.

The sheet metal substrate may have a thickness of less than 5 mm, preferably less than 3 mm or less than 2 mm. According to one group of embodiments, the sheet metal substrate may have a thickness of about 1.25 mm, 1.50 mm, or 1.75 mm.

The mounting flange may comprise at least one axially recessed portion adapted for receiving an attachment member for mounting, preferably a plurality of recessed portions.

The attachment member may for example be a screw or a nail. Thus, the recess may be adapted for a screw or nail head.

The recessed portions may be circumferentially spaced at approximately the same radius.

The mounting flange may comprise at least one mounting hole, preferably a plurality of mounting holes.

The at least one mounting hole may be provided substantially at the center of said at least one recess.

The mounting flange may extend radially outwardly from an outer surface of the duct body.

The radial extent of the mounting flange may be constant, as seen from the outer surface and around a circumference of duct body.

Alternatively, the mounting flange may comprise at least one first portion with a first radial extent and at least one second portion with a second radial extent, wherein the first and second radial extent differs.

The mounting flange may for example present at least one first portion comprising a mounting hole, and preferably a recessed portion as described above, wherein said at least one first portion has the greatest radial extent of the mounting flange, as seen from the outer surface of the duct body.

The mounting flange may be formed from at least two flange portions.

Said at least two flange portions may be attached to one another by means of any suitable fastener or attachment member, such as at least one screw or bolt.

The mounting flange may be received in a groove extending around the duct body.

Thereby, an axial displacement of mounting flange relative the duct body can be prevented.

The groove may have a thickness, as seen in the axial direction, corresponding to the first thickness of the mounting flange.

The groove may have a radial depth corresponding to 80-400 % of a material thickness of the duct body, preferably 80-100 %, 100-150 %, 125-175 %, 150-200 %, 200-250 %, 225-275 %, 250-300 %, 300-350 %, 325-375 %, or 350-400 % .

The mounting flange may be integrated with the duct body and preferably permanently attached to the duct body.

By permanently attached is meant that the mounting flange may not be detached from the duct body without breaking the mounting flange and/or the duct body. The mounting flange may be integrated with the duct body during manufacturing of the damper device, i.e. the mounting flange may be permanently attached to the duct body already when produced in factory.

The duct body may have a first open end and a second, axially opposite, open end, wherein the mounting flange, is located at a first distance from the first open end and at a second distance from the second open end, as seen in the axial direction.

The first and second open ends can be seen to be displaced in the axial direction.

The first and second distance may be equal. As an alternative, the second distance may be larger than the first distance. As yet another alternative, the second distance may be smaller than the first distance.

The first distance and/or the second distance may correspond to at least 10 % of a length of the duct body, preferably at least 20 % of the length of the duct body.

The fire protection damper device may further comprise at least one sensor for sensing at least one fire-related parameter.

The sensor may for example be able to detect a rise in temperature and/or smoke. Thus, the at least one sensor may be a temperature sensor and/or a smoke sensor.

The fire protection damper device may further comprise an inner swelling seal arranged on an inner surface of the duct body for sealing of the damper blade against the duct body when in the closed position.

The inner swelling seal may extend all the way around/along the inner surface, such that it covers an inwardly in the duct body, facing annular surface.

The inner swelling seal may be provided at an axial position corresponding to a position of the damper blade in its closed position, such that the swelling seal, when activated, cooperates with the damper blade.

The fire protection damper device further comprises an outer swelling seal arranged on an outer surface of the duct body, preferably around the duct body, for sealing against an inner surface of said ventilation opening of the structure.

Thus, the outer swelling seal can be arranged on at least a portion of the outer surface of the duct body located in between the mounting flange and the second end of the duct body.

A tape may be provided around the outer swelling seal, as an outermost layer.

The outer swelling seal may extend all the way around the outer surface of the duct body, such that it covers an outwardly facing annular surface.

The outer swelling seal may be provided at an axial position corresponding to a position of the damper blade in its closed position.

According to a second aspect there is provided a fire protection damper device installation, comprising: a fire protection damper device as described above in relation to the first aspect, a structure of a building, preferably a wall, forming a fire cell boundary, the structure having a structure surface, wherein a portion of the duct body of the fire protection damper device extends through a ventilation opening of the structure, the ventilation opening being sized and shaped for receiving said portion of the duct body, wherein the elastic sealing member seals the mounting flange against said structure surface, and wherein the mounting flange is releasably and mechanically mounted to the structure.

By releasably mounted is meant that the fire protection damper device may be detached from the structure without breaking the damper device or the structure.

The elastic sealing member is compressed in an axial direction of the duct body between the mounting flange and the structure surface.

According to the above installation, no fire sealing compound is required between the mounting flange and the structure to which it is mounted. Thus, the fire protection damper device may be mounted to the structure only by means of the mounting flange being releasably and mechanically mounted to the structure.

At least one surface of the mounting flange of the fire protection damper device may abut against a surface of the structure.

The mechanically mounting may be achieved by means of any suitable fastener or attachment member, such as for example screw(s) and/or nail(s).

The fire protection damper device may be fire rated and classified as at least class EI30, preferably EI60 according to European Standard EN 13501-3.

Further, the fire protection damper device, may be fire rated and fulfil the requirements of the European Standard EN 15650.

Fire dampers can be tested according to the European Standard EN 1366-2 and classified according to the European Standard EN 13501-3.

The structure may comprise a mineral board or concrete.

There may be provided a gap between the structure and the duct body, as seen at a cross-section of the ventilation opening, the gap being less than 10 mm, preferably less than 5 mm or less than 3 mm.

Thus, there may be a free space around the duct body, the free space being formed in between the duct body and the structure.

According to a third aspect, there is provided a method of mounting a fire protection damper device as described above in relation to the first aspect, to a structure, preferably a wall, comprising: providing a ventilation opening in the structure, the ventilation opening being sized and shaped for receiving a portion of the duct body; placing said portion of the duct body through said ventilation opening, such that the elastic sealing member seals the mounting flange against said structure; and mechanically mounting the mounting flange to said structure.

The mounting of the fire protection damper device may be performed without using any fire sealing compound.

Thus, the mounting of the fire protection damper device may be performed without using any fire sealing compound between the mounting flange and the structure.

The method may further comprise compressing the elastic sealing member in the axial direction between the structure surface and the mounting flange.

The sealing member may be spaced from a radially outward edge of the mounting flange.

### Brief Description of the Drawings

Embodiments of the present solution will now be described, by way of example, with reference to the accompanying schematic drawings in which:
Fig. 1a illustrates a fire protection damper device.
Fig. 1b illustrates the fire protection damper device in a closed position, as seen from the second open end 19 of the device as illustrated in Fig. 1a.
Fig. 1c illustrates the fire protection damper device, as seen from below the device as illustrated in Fig. 1a.
Fig. 2a illustrates the fire protection damper device as illustrated in Figs. 1a-1c.
Fig. 2b illustrates the fire protection damper device in a closed position, as seen from the first open end 18 of the device.
Fig. 2c illustrates a cross-sectional view of the fire protection device, taken at section A-A, as illustrated in Fig. 2b.
Fig. 2d illustrates an enlarged view of section B as illustrated in Fig. 2b.
Fig. 3a illustrates the fire protection damper device and a structure of a building.
Fig. 3b illustrates a fire protection damper device installation.

### Description of Embodiments

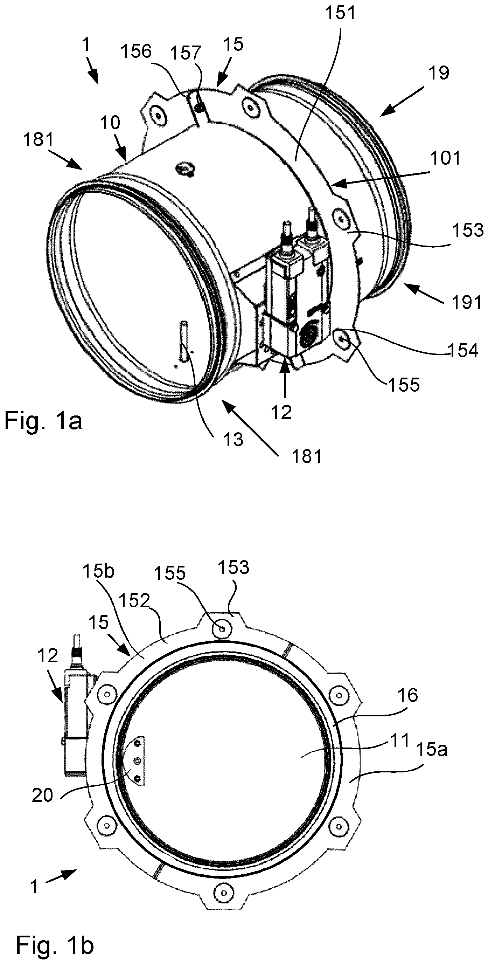

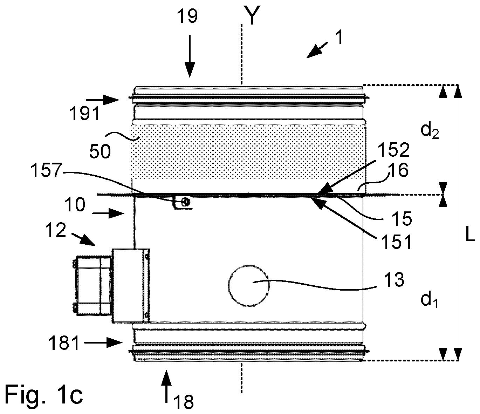

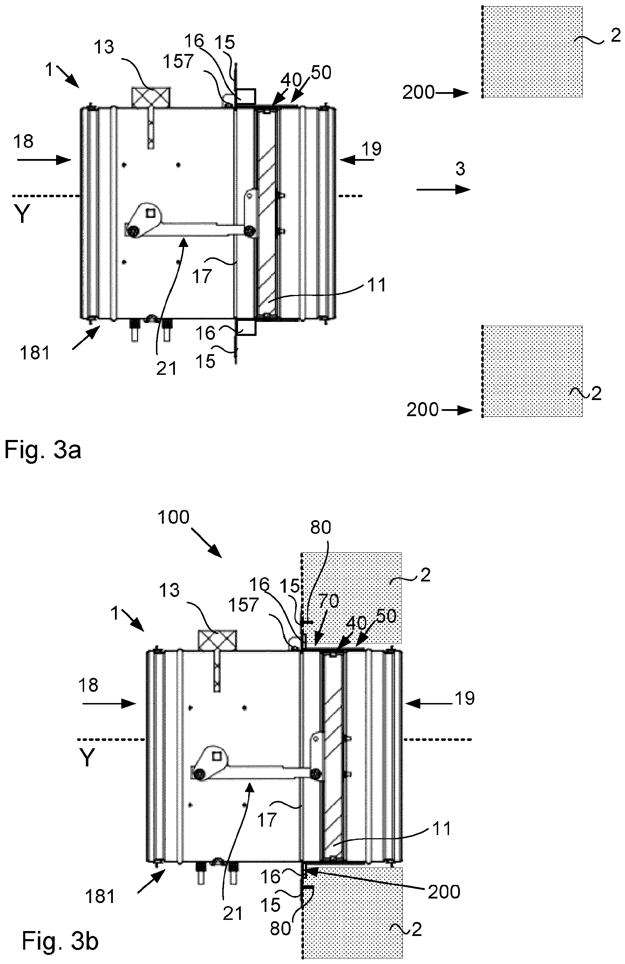

Figs. 1-3 illustrate one example of a fire protection damper device 1. The fire protection damper device 1 is suitable for mounting to a ventilation opening 3, such as a passing for a ventilation duct, of a structure 2 of a building, see Figs. 3a- 3b. Figs. 3a-3b illustrate a structure 2 in form of a wall. The wall may form a fire cell boundary. However, it is understood that other types of structures are also possible, such as a floor or a ceiling.

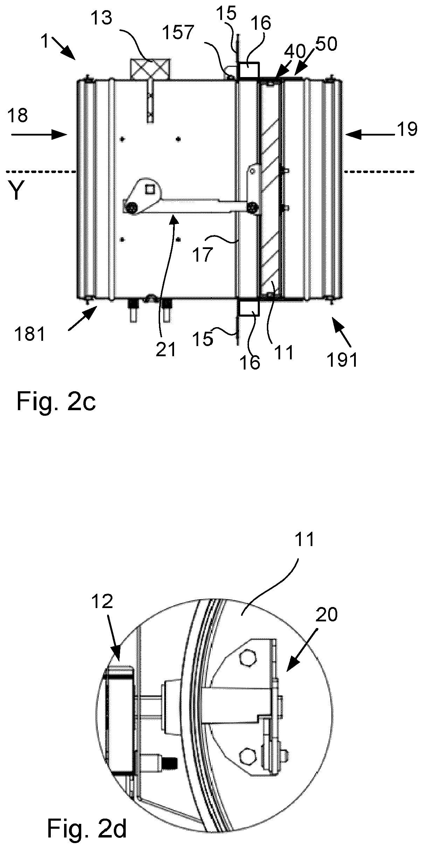

As illustrated in Figs. 1-3, the fire protection damper device 1 comprises a duct body 10. The duct body 10 may present a first end portion 181, and an opposite second end portion 191, see Fig. 1a, 1b and 2c. At least the second end portion 191 of the duct body 10 may be adapted to be fitted into said ventilation opening 3 of said structure 2, see Fig. 3b. The first end portion 181 may be adapted for connection to a second duct body (not illustrated), such as for example a heating duct, a ventilation duct or air conditioning duct. The second end portion 191 may be adapted for connection to a third duct body (not illustrated), such as for example a heating duct, a ventilation duct or air conditioning duct.

Further, the duct body 10 may present a first open end 18 and an opposite second open end 19. Thus, the duct body can be seen to present a length L corresponding to a distance, as seen in the axial direction, between said first and second open ends 18, 19, see Fig. 1c. The length L may be 300-600 mm, preferably 350-400 mm, 400-450 mm, or 450-500 mm. As one example, the length L may be about 375 mm. As another example, the length L may be about 477 mm.

As illustrated in Figs. 1-3, the duct body 10 may be provided in form of a tubular body. The duct body may present a tube diameter of 50-1500 mm, preferably 60-100 mm, 100-200 mm, 200-300 mm, 300-400 mm, 400-500 mm, 500-600 mm, 600-700 mm, 800-900 mm, 900-1000 mm, 1000-1100 mm, 1100-1200 mm, 1200-1300 mm or 1300-1400 mm. As one example, the tube diameter may be about 70 mm. As another example, the tube diameter may be about 95-99 mm. As another example, the tube diameter may be about 630 mm. As yet another example, the tube diameter may be about 1250 mm.

The duct body can present a cross-sectional area. As illustrated in Figs. 1-3, the duct body can have a substantially circular cross-section. Although not illustrated, it is understood that other shapes and sizes of the duct body is possible. For example, the duct body may have a substantially rectangular or square cross-section.

Further, the duct body 10 may have a substantially constant cross-sectional area, as seen in a direction from the first end 18 to the second end 19 of the duct body 10. The duct body 10 may have an axial direction, substantially perpendicular to the cross-sectional area of the duct body.

Thus, the duct body 10 can be seen to comprise a flow area, the flow area being unrestricted except for a damper blade 11.

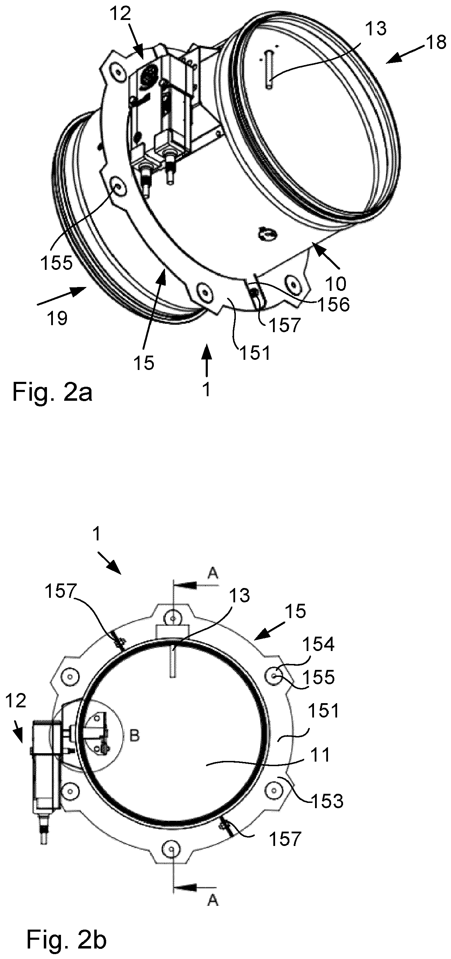

Further, as illustrated in Figs. 1b, 2b and 2c, the fire protection damper device 1 comprises a damper blade 11. The damper blade 11 may be formed of a fireproof material. The damper blade 11 is movably arranged in the duct body 10. The damper blade is movable between an open position (not illustrated) and a closed position, see Figs. 1b, 2b-2c and 3a-3b. The damper blade 11 may be rotationally movably arranged such that it may be rotated between the open and closed position.

The damper blade 11 may be movable by means of a damper blade actuating arrangement for causing the damper blade 11 to move between the open position and the closed position. The damper blade actuating arrangement may be configured to automatically and/or manually move the damper blade 11 into closed position upon presence of a fire-related parameter, such as a raised temperature and/or smoke. Further, the damper blade actuating arrangement may be configured for automatic and/or manual movement of the damper blade 11 into open position. The damper blade actuating arrangement may be motor driven. Alternatively, the damper blade actuating arrangement may not be motor driven. According to one example, the damper blade actuating arrangement may comprise an actuator.

Figs. 1-3 illustrates one example of a damper blade actuating arrangement. As illustrated in Figs. 1-3, the fire protection damper device 1 may comprise an actuator 12. The actuator 12 may be arranged to cause the damper blade 11 to move between the open position and the closed position.

As illustrated in Figs. 2b-2d, the damper blade actuating arrangement may comprise a linkage member 21. The linkage member 21 may connect to the damper blade 11 by an attachment member 20. Said actuator 12 may cause the damper blade 11 to move by causing said linkage member 21 to move.

The actuator 12 may be arranged to cause the damper blade 11 to move based on a signal from at least one sensor 13 of the fire protection damper device 1 . The at least one sensor may be configured to detect a fire by sensing at least one fire-related parameter. The sensor may for example be able to detect a rise in temperature and/or smoke. For example, as illustrated in Figs. 1-3, the fire protection damper device 1 can comprise a temperature sensor 13. The actuator may be configured to close the damper blade 11 when a temperature of above 50 °C is detected, preferably above 60 °C or above 70 °C, most preferably around a temperature of 72 °C, around a temperature of 95 °C, around a temperature of 120 °C or around a temperature of 140 °C.

The actuator 12 as illustrated in Figs. 1-3 may be motor-driven.

Although Figs. 1-3 illustrates one example of a damper blade actuating arrangement, it is understood that other arrangements are possible for moving the damper blade 11 between the open position and the closed position.

For example, alternatively, or additionally, the actuator 12 may be arranged to cause the damper blade 11 to move based on a signal from an external sensor (not illustrated), i.e. a sensor arranged separately of the damper device 1. The actuator 12 may for example be arranged to cause the damper blade 11 to move based on a signal from a fire alarm system (not illustrated).

As another example, the fire protection damper device 1 may comprise a fusible link (not illustrated). Thus, the damper blade 11 may be moved into the closed position upon the operation of a fusible link.

As one example, a fusible member (not illustrated) may be provided that melts at a predetermined temperature indicating the presence of a fire. The fusible member may be arranged such that, upon melting, it allows for an actuating mechanism, such as for example at least one spring (not illustrated), or gravity, to move the fire blade 11 into the closed position.

As another example, a biasing member, such as for example at least one spring (not illustrated), may be arranged such that upon a signal from at least one sensor, said sensor being configured to detect a fire by sensing at least one fire-related parameter, the biasing member is released, causing the damper blade 11 to move into the closed position.

Alternatively, or additionally, the fire protection damper device 1 may comprise a crank or rotatable arm for manual movement of the damper blade 11.

Further, as illustrated in Figs. 1-3, the fire protection damper device 1 comprises a mounting flange 15. The mounting flange 15 is adapted for mounting of the damper device 1 to said structure 2. As illustrated in Figs. 1-3, the mounting flange 15 can extend around the duct body 10.

The mounting flange 15 may have a first thickness, as seen in an axial direction of the duct body 10. The first thickness may be less than 5 mm, preferably less than 3 mm or less than 2 mm.

Further, as illustrated in Figs. 1-3, the mounting flange 15 may be seen to extend radially outwardly from an outer surface 101 of the duct body 10.

The mounting flange 15 may be formed from a sheet metal substrate. The sheet metal substrate may have a thickness of less than 5 mm, preferably less than 3 mm or less than 2 mm. According to one group of embodiments, the sheet metal substrate may have a thickness of about 1.25 mm, 1.50 mm, or 1.75 mm. Preferably the mounting flange may be formed from one layer of sheet metal. Thus, the mounting flange 15 may be substantially flat.

As illustrated in Figs. 1a, 1c and Figs. 2a-2b, the mounting flange 15 may present a first substantially flat surface 151 facing the axial direction towards the first end 18. As illustrated in Fig. 1b and 1c, the mounting flange 15 may present a second substantially flat surface 152 facing the axial direction towards the second end 19. The first and second substantially flat surfaces 151, 152 being opposite to one another. Thus, the second substantially flat surface 152 of the mounting flange 15 can be seen to face said structure 2 when mounted to said structure 2.

Further, the mounting flange 15 may comprise at least one mounting hole 155. The mounting hole 155 may be adapted for receiving an attachment member 80 for mounting, such as a screw or a nail. As illustrated in Fig. 1a-1b and Figs. 2a-2b, the mounting flange 15 may comprise a plurality of mounting holes 155. As illustrated, the plurality of recessed portions 154 may be evenly distributed over the mounting flange 15.

Further, the mounting flange 15 may comprise at least one recessed portion 154, as seen in the axial direction towards the second end. The recessed portion 154 may be adapted for receiving the attachment member 80 for mounting, such as a screw or a nail. As illustrated in Fig. 1a and Figs. 2a-2b, the mounting flange 15 may comprise a plurality of recessed portions 154. As illustrated, the plurality of recessed portions 154 may be evenly distributed over the mounting flange 15. Said at least one mounting hole 155 may be provided substantially at the center of said at least one recess 154.

Further, as illustrated in Figs. 1a-1b and Figs. 2a-2b, the mounting flange 15 may comprise at least one first portion with a first radial extent and at least one second portion with a second radial extent, wherein the first and second radial extent differs. The mounting flange 15 may for example present at least one first portion 153 comprising a mounting hole 155, and preferably a recessed portion 154, the at least one first portion 153 having the greatest radial extent of the mounting flange 15, as seen from the outer surface 101 of the duct body 10. A first radial extent corresponding to the greatest radial extent, may for example be 20-100 mm, preferably 30-90 mm, 40-80 mm or 50-70 mm, most preferably 60-85 mm, 70-80 mm or 65-75 mm. As one example, the first radial extent may be about 70 mm. A second radial extent may for example be 10-50 mm, preferably 15-45 mm, 20-40 mm, 25-35 mm or 30-49 mm. The second radial extent may be below 50 mm.

Further, as illustrated in Figs. 1-3, the mounting flange 15 can be formed of two flange portions 15a, 15b. Although not illustrated, it is understood that as an alternative, the mounting flange 15 can be formed of one single piece, i.e. one flange portion, or by more than two flange portions. Each flange portion 15a, 15b may comprise an interconnection portion for connection to an adjacent flange portion. For example, an end portion of each flange portion may be formed as a protruding edge portion 156, see Fig. 1a and Fig. 2a. The protruding edge portion 156 may protrude in the axial direction, as seen towards the first end 18 of the duct body. The protruding edge portion 156 may be formed as a bracket. The protruding edge portion 156 may be formed of the same material as the mounting flange 15. For example, the protruding edge portion 156 may be formed by bending the sheet metal material forming the mounting flange 15. The protruding edge portion 156 may be provided with at least one hole adapted to receive any suitable fastener or attachment member 157, such as at least one screw or bolt. Each end of the two flange portions 15a, 15b can be seen to present a protruding edge portion 156. A first surface of a first protruding edge portion of the first flange portion 15a can be seen to face a corresponding first surface of a first protruding edge portion of the second flange portion 15b. As illustrated Figs. 1a, 1c, and Figs. 2a- 2c, the flange portions 15a, 15b can be attached to one another by means of a screw.

Further, the mounting flange 15 may be received in a groove 17 extending around the duct body 10, see Fig. 2c. The groove 17 may have a thickness, as seen in the axial direction, corresponding to the first thickness of the mounting flange 15. The groove 17 may have a radial depth, as seen from the outer surface of the duct body, corresponding to 80-400 % of a material thickness of the duct body 10. The groove 17 may for example have a radial depth corresponding to 80-100 %, 100-150 %, 125-175 %, 150-200 %, 200-250 %, 225-275 %, 250-300 %, 300-350 %, 325-375 %, or 350-400 % of a material thickness of the duct body 10.

The mounting flange 15 may be integrated with the duct body 10. Preferably the mounting flange 15 is permanently attached to the duct body 10.

The mounting flange 15 may be located at a first distance d₁ from the first open end 18, see Fig. 1b. The mounting flange 15 may be located at a second distance d₂ from the second open end 19, see Fig. 1b. The first distance d₁ and second distance d₂ may be equal. As an alternative, the second distance may be larger than the first distance d₁. As yet another alternative, the second distance d₂ may be smaller than the first distance d₁, see Fig. 1b. The first distance d₁ and/or the second distance d₂ may correspond to at least 10 % of a length L of the duct body 10. Preferably the first distance d₁ and/or the second distance d₂ may correspond to at least 20 % of the length L of the duct body 10.

Further, as illustrated in Figs. 1-3, the fire protection damper device 1 may further comprise an elastic sealing member 16 for sealing the mounting flange 15 against said structure 2. The sealing member 16 may extend around the duct body 10. The elastic sealing member 16 may extend axially outwardly from a surface 152 of the mounting flange 15. The elastic sealing member can be seen to be arranged closer to the second end 19 of the duct body 10 than the mounting flange 15, as seen in the axial direction. Further, the elastic sealing member 16 may extend radially outwardly from the outer surface 101 of the duct body 10. A radial extent of the elastic sealing member 16 may be smaller than a radial extent of the mounting flange 15, as seen from the outer surface 101 of the duct body 10, see Fig. 1b.

A radial extent of the elastic sealing member 16, i.e. a radial thickness as seen when not compressed, may be 5-30 mm, preferably 5-10 mm, 10-15 mm, 15-20, 20-25 or 25-30 mm.

A radial extent of the mounting flange 15 may be 10-100 mm, preferably 15-95 mm, 20-90 mm or 25-85 mm, most preferably 30-80 mm, 35-75 mm, 40-70 mm, 50-60 mm or 45-65 mm.

The elastic sealing member 16 may have a second uncompressed thickness, as seen in an axial direction of the duct body 10. The second uncompressed thickness of the elastic sealing member may be 5-30 mm, preferably 5-10 mm, 10-15 mm, 15-20, 20-25 or 25-30 mm. The second uncompressed thickness of the elastic sealing member 16 may be larger than the first thickness of the mounting flange 15.

The elastic sealing member 16 may be formed of an elastic material. The elastic sealing member 16 may be formed of an expanded polymer material or of a hollow polymer material.

The elastic sealing member 16 may be provided in form of a prefabricated sealing strip. The sealing strip may have a substantially circular, rectangular, or square cross-section. The sealing strip may present a square profile, for example a square profile of 10x10 mm.

The fire protection damper device 1 may further comprise an inner swelling seal 40, see Fig. 2c. The inner swelling seal 40 may be arranged on an inner surface of the duct body 10 for sealing of the damper blade 11 against the duct body 10 when in the closed position. The inner swelling seal 40 may be configured to swell at a temperature of about 125-175 °C, preferably about 130-170 °C or 140-160 °C, most preferably about 150 °C.

The fire protection damper device may further comprise an outer swelling seal 50, see Fig. 1c and Fig. 2c. The outer swelling seal 50 may be arranged on an outer surface of the duct body 10. Preferably the outer swelling seal 50 may be arranged around the duct body 10 for sealing against an inner surface of said ventilation opening 3 of the structure 2. Thus, the outer swelling seal 50 can be arranged on at least a portion of the outer surface 101 of the duct body 10 located in between the mounting flange 15 and the second end 19 of the duct body 10. A tape (not illustrated) may be provided around the outer swelling seal 50, as an outermost layer. The outer swelling seal 50 may be configured to swell at a temperature of about 125-175 °C, preferably about 130-170 °C or 140-160 °C, most preferably about 150 °C.

Figs. 3a-3b illustrates a fire protection damper device installation 100. As illustrated, the fire protection damper device installation 100 may comprise a fire protection damper device 1 as described in relation to Figs. 1-2.

The fire protection damper device installation 100 further comprises a structure 2 of a building. The structure can be seen to have a structure surface 200. Figs. 3a-3b illustrate a structure 2 in form of a wall. The wall may form a fire cell boundary. The wall 2 may comprise a mineral board or concrete. However, it is understood that other types of structures are also possible, such as a floor or a ceiling. The fire protection damper device 1 may be fire rated and classified as at least class EI30, preferably EI60 according to European Standard EN 13501-3.

As illustrated in Fig. 3b, a portion of the duct body 10 of the fire protection damper device 1 extends through a ventilation opening 3 of the structure 2, when mounted to the structure 2. The ventilation opening 3 is sized and shaped for receiving said portion of the duct body 10.

As illustrated in Fig. 3b, the elastic sealing member 16 seals the mounting flange 15 against said structure surface 200, when mounted to the structure. According to the fire protection damper device installation 100 as illustrated in Figs. 3a-3b, the mounting flange 15 is mechanically mounted to the structure 2. The mechanically mounting may be achieved by means of any suitable fastener or attachment member 80, such as for example screw(s) and/or nail(s).

Further, the mounting flange 15 may be releasably mounted to the structure 2. No fire sealing compound is required between the mounting flange 15 and the structure 2. Thus, the fire protection damper device 1 may be mounted to the structure 2 only by means of the mounting flange 15 being releasably and mechanically mounted to the structure 2.

At least one surface of the mounting flange 15 of the fire protection damper device 1 may abut against a surface of the structure 2, when mounted thereto.

Further, there may be provided a gap between the structure 2 and the outer surface of the duct body 10. The gap may be less than 10 mm, preferably less than 5 mm or less than 3 mm. Thus, there may be a free space 70 around the duct body, see Fig. 3b. The free space 70 being formed in between the duct body and the structure 2.

The present disclosure further relates to a method of mounting a fire protection damper device 1 to a structure 2. The fire protection damper device 1 may be designed and configured as described above in relations to Figs. 1-3. The structure 2 may be a structure as described above in relation to Figs. 3a-3b.

The method comprises providing a ventilation opening 3 in the structure 2. The ventilation opening 3 may be sized and shaped for receiving a portion of the duct body 10. The method further comprises placing said portion of the duct body 10 through said ventilation opening 3 such that the elastic sealing member 16 seals the mounting flange 15 against said structure 2. The method further comprises mechanically mounting the mounting flange 15 to said structure 2.

The mounting of the fire protection damper device 1 may be performed without using any fire sealing compound. Thus, the mounting of the fire protection damper device 1 may be performed without using any fire sealing compound between the mounting flange 15 and the structure 2.

The method may further comprise compressing the elastic sealing member 16 in the axial direction between the structure surface 200 and the mounting flange 15. Further, the sealing member 16 may be spaced from a radially outward edge of the mounting flange 15.

## Claims

1. A fire protection damper device (1) for mounting to a ventilation opening (3) of a structure (2) of a building, the damper device (1) comprising:
a duct body (10);
a damper blade (11) movably arranged in the duct body, the damper blade (11) being movable between an open position and a closed position;
a mounting flange (15) for mounting of the damper device (1) to said structure (2), wherein the mounting flange (15) extends around the duct body (10);
**characterized in that**
the damper device (1) further comprises:
an elastic sealing member (16) for sealing the mounting flange (15) against said structure, wherein the sealing member (16) extends around the duct body (10), and
an outer swelling seal (50) arranged on an outer surface of the duct body (10), preferably around the duct body (10), for sealing against an inner surface of said ventilation opening (3) of the structure (2).

2. The fire protection damper device according to claim 1, wherein the mounting flange (15) has a first thickness, and the elastic sealing member (16) has a second uncompressed thickness, wherein the second uncompressed thickness is larger than the first thickness, as seen in an axial direction of the duct body (10), the axial direction being substantially perpendicular to a cross-sectional area of the duct body (10).

3. The fire protection damper device according to any one of the preceding claims, wherein the elastic sealing member (16) extends radially outwardly from an outer surface (101) of the duct body (10).

4. The fire protection damper device according to any one of the preceding claims, wherein the elastic sealing member (16) extends axially outwardly from a surface (152) of the mounting flange (15).

5. The fire protection damper device according to any one of the preceding claims, wherein the mounting flange (15) is formed from a sheet metal substrate.

6. The fire protection damper device according to any one of the preceding claims, wherein the mounting flange (15) comprises at least one axially recessed portion (154) adapted for receiving an attachment member (80) for mounting, preferably a plurality of recessed portions.

7. The fire protection damper device according to any one of the preceding claims, wherein the mounting flange (15) comprises at least one mounting hole (155), preferably a plurality of mounting holes.

8. The fire protection damper device according to any one of the preceding claims, wherein the mounting flange (15) extends radially outwardly from an outer surface (101) of the duct body (10).

9. The fire protection damper device according to any one of the preceding claims, wherein the mounting flange (15) is integrated with the duct body (10) and preferably permanently attached to the duct body (10).

10. The fire protection damper device according to any one of the preceding claims, further comprising at least one sensor (13) for sensing at least one fire-related parameter.

11. The fire protection damper device according to any one of the preceding claims, further comprising an inner swelling seal (40) arranged on an inner surface of the duct body (10) for sealing of the damper blade (11) against the duct body (10) when in the closed position.

12. A fire protection damper device installation (100), comprising:
a fire protection damper device (1) according to any one of the preceding claims,
a structure (2) of a building, preferably a wall, forming a fire cell boundary, the structure having a structure surface (200),
wherein a portion of the duct body (10) of the fire protection damper device (1) extends through a ventilation opening (3) of the structure (2), the ventilation opening (3) being sized and shaped for receiving said portion of the duct body (10),
wherein the elastic sealing member (16) seals the mounting flange (15) against said structure surface (200), and
wherein the mounting flange (15) is releasably and mechanically mounted to the structure (2).

13. The fire protection damper device installation (100) according to claim 12, wherein the fire protection damper device is fire rated and classified as at least class EI30, preferably EI60 according to European Standard EN 13501-3.

14. The fire protection damper device installation (100) according to claim 12 or 13, wherein the structure (2) comprises a mineral board or concrete.

15. A method of mounting a fire protection damper device (1) according to any one of claims 1-11, to a structure (2), preferably a wall, comprising:
providing a ventilation opening (3) in the structure (2), the ventilation opening (3) being sized and shaped for receiving a portion of the duct body (10),
placing said portion of the duct body through said ventilation opening (3), such that the elastic sealing member (16) seals the mounting flange (15) against said structure (2), and
mechanically mounting the mounting flange (15) to said structure (2).
